# EUROPÄISCHE PATENTANMELDUNG

(11) **EP 3 705 329 A1**
(43) Veröffentlichungstag der Anmeldung: **09.09.2020**
(21) Anmeldenummer: 19161581.4
(22) Anmeldetag: 08.03.2019
(51) Int. Cl.: B60J 5/04, B60K 15/05, B60R 19/02, B60R 19/44

(54) **SERVICEÖFFNUNGSVORRICHTUNG**

(71) Anmelder: MAGNA STEYR Fahrzeugtechnik AG & Co KG, 8041 Graz (AT)
(72) Erfinder: HÖRMANN, Reinhard, 8151 Hitzendorf (AT); KUHLE, Rene, 8010 Graz (AT); PISCHOF, Patrick, 8044 Graz (AT); PLANKA, Franz, 9433 St. Andrä (AT)
(74) Vertreter: Zangger, Bernd

(57) **Zusammenfassung**

Eine Serviceöffnungsvorrichtung zum Abdecken und Freilegen einer Serviceöffnung (1) eines Kraftfahrzeuges, wobei die Serviceöffnungsvorrichtung eine Serviceklappe (2) umfasst und ein Karosseriebauteil (3) des Kraftfahrzeugs umfasst, wobei das Karosseriebauteil (3) die Serviceöffnung (1) aufweist, wobei am Karosseriebauteil (3) im Bereich eines ersten Randes der Serviceöffnung (1) zumindest eine Befestigungslasche (4) ausgebildet ist, wobei an der Serviceklappe (2) im Bereich des dem ersten Rand der Serviceöffnung (1) entsprechenden ersten Randes der Serviceklappe (2) zumindest ein Befestigungsdom (5) ausgebildet ist, wobei an der Befestigungslasche (4) und/oder am Befestigungsdom (5) ein Magnet (6) angeordnet ist, so dass die Serviceklappe (2) im Bereich des ersten Randes während dem Abdecken der Serviceöffnung (1) durch Magnetkraft am Karosseriebauteil (3) gehalten ist.

## Beschreibung

### Gebiet der Erfindung

Die vorliegende Erfindung betrifft eine Serviceöffnungsvorrichtung zum Abdecken und Freilegen einer Serviceöffnung eines Kraftfahrzeuges.

### Stand der Technik

Es ist bekannt, dass Kraftfahrzeuge eine oder mehrere Serviceöffnungen aufweisen können, die den Zugang zur Wartung und Reparatur bestimmter Bauteile des Kraftfahrzeuges ermöglichen. Solche Serviceöffnungen können oft durch Abdeckelemente, nämlich Serviceklappen, abgedeckt und freigelegt werden. Die Serviceklappen sind dazu üblicherweise mittels Scharnieren an einem Bauteil, insbesondere Karosseriebauteil, befestigt, so dass sie auf- und zu geschwenkt werden können.

### Zusammenfassung der Erfindung

Es ist eine Aufgabe der Erfindung, eine Serviceöffnungsvorrichtung zum Abdecken und Freilegen einer Serviceöffnung eines Kraftfahrzeuges anzugeben, die ein schönes Fugenbild zwischen einem Abdeckelement der Serviceöffnung und der Umgebung der Serviceöffnung ermöglicht und dabei kostengünstig herstellbar ist.

Die Lösung der Aufgabe erfolgt durch eine Serviceöffnungsvorrichtung zum Abdecken und Freilegen einer Serviceöffnung eines Kraftfahrzeuges, wobei die Serviceöffnungsvorrichtung eine Serviceklappe umfasst und ein Karosseriebauteil des Kraftfahrzeugs umfasst, wobei das Karosseriebauteil die Serviceöffnung aufweist, wobei am Karosseriebauteil im Bereich eines ersten Randes der Serviceöffnung zumindest eine Befestigungslasche ausgebildet ist, wobei an der Serviceklappe im Bereich des dem ersten Rand der Serviceöffnung entsprechenden ersten Randes der Serviceklappe zumindest ein Befestigungsdom ausgebildet ist, wobei an der Befestigungslasche und/oder am Befestigungsdom ein Magnet angeordnet ist, so dass die Serviceklappe im Bereich ihres ersten Randes während dem Abdecken der Serviceöffnung durch Magnetkraft am Karosseriebauteil gehalten ist.

Erfindungsgemäß ist eine Serviceklappe, als Abdeckelement zur Abdeckung einer Serviceöffnung an einem Kraftfahrzeug, mittels Magnetkraft am Kraftfahrzeug gehalten. Dazu sind am Bauteil, das die Serviceöffnung aufweist, das ein Karosseriebauteil darstellt, ein oder mehrere Befestigungslaschen ausgebildet, die Magnete aufweisen oder zumindest aus Metall ausgebildet sind und auf der entsprechenden, gegenüberliegenden Seite, nämlich auf der Serviceklappe, ein oder mehrere Befestigungsdome ebenfalls mit Magneten oder zumindest aus Metall ausgebildet, so dass zumindest entweder die Befestigungslaschen oder die Befestigungsdome magnetisch sind und insgesamt die Serviceklappe an ihrem ersten Rand, beispielsweise dem oberen Rand, durch Magnetkraft am Kraftfahrzeug gehalten ist.

Eine derartige Verbindung mittels Magneten ermöglicht eine hohe Positionsgenauigkeit und daher die Ausbildung eines exakten Fugenverlaufs zwischen Serviceklappe und Karosseriebauteil. Durch eine solche Befestigung mittels Magneten ist die Verwendung eines Scharniers nicht erforderlich. Vielmehr genügt eine einfache Abstützung der Serviceklappe im abdeckenden Zustand, also während der Abdeckung, im Bereich des dem ersten Rand gegenüberliegenden Randes, beispielsweise des unteren Randes, der Serviceklappe. Die Serviceklappe kann dann beispielsweise durch eine Schenkbewegung mit einer Schwenkachse im Bereich des dem ersten Rand gegenüberliegenden, beispielsweise unteren Randes der Serviceklappe zugeklappt werden.

Die Größe und Form der Serviceöffnung entspricht im Wesentlichen der Größe und Form der Serviceklappe, so dass die Serviceöffnung durch die Serviceklappe abdeckbar ist. Der erste Rand der Serviceöffnung entspricht daher dem ersten Rand der Serviceklappe, beispielsweise der obere Rand der Serviceöffnung dem oberen Rand der Serviceklappe.

Die Serviceöffnung und die Serviceklappe haben bevorzugt eine im Wesentlichen rechteckige oder quadratische Form.

Vorzugsweise ist der erste Rand der obere Rand, also am Kraftfahrzeug oben. Alternativ kann der erste Rand beispielsweise der untere Rand sein. Der erste Rand kann auch ein seitlicher Rand sein, also ein linker oder rechter Rand der Serviceöffnung und der Serviceklappe.

Ein "Befestigungsdom" ist bevorzugt eine Erhebung, die sich von ihrer Umgebung abhebt. In einer alternativen Ausführung der Erfindung kann ein "Befestigungsdom" auch durch eine ebene Fläche gebildet werden, so dass der Magnet in die Serviceklappe eingearbeitete ist und beispielsweise mit deren Fläche planar ist.

Vorzugsweise sind am Karosseriebauteil im Bereich des ersten Randes der Serviceöffnung zumindest drei Befestigungslaschen, verteilt über die Breite der Serviceöffnung, ausgebildet, wobei an der Serviceklappe im Bereich des ersten Randes der Serviceklappe ebenfalls zumindest drei Befestigungsdome, verteilt über die Breite der Serviceklappe, ausgebildet sind. An den Befestigungslaschen und/oder an den Befestigungsdomen ist jeweils ein Magnet angeordnet, so dass die Serviceklappe im Bereich ihres ersten Randes während dem Abdecken der Serviceöffnung durch Magnetkraft im Wesentlich über die gesamte Breite der Serviceklappe am Karosseriebauteil gehalten ist.

Bevorzugt ist an der Serviceklappe im Bereich eines, dem ersten Rand gegenüberliegenden, zweiten Randes der Serviceklappe zumindest eine Formschlusszunge ausgebildet, bevorzugt zumindest drei Formschlusszungen, die besonders bevorzugt über die Breite der Serviceklappe verteilt sind. Am Karosseriebauteil ist im Bereich des dem zweiten Rand der Serviceklappe entsprechenden zweiten Randes der Serviceöffnung zumindest eine Aufnahmeöffnung zur Aufnahme der Formschlusszunge ausgebildet, bevorzugt wiederum zumindest drei Aufnahmeöffnungen zur Aufnahme der jeweiligen Formschlusszungen, so dass die Serviceklappe im Bereich ihres zweiten Randes während dem Abdecken der Serviceöffnung durch einen Formschluss am Karosseriebauteil gehalten ist.

Der zweite Rand der Serviceöffnung entspricht dem zweiten Rand der Serviceklappe. Wenn beispielsweise der erste Rand der obere Rand ist, dann ist der zweite Rand der untere Rand und umgekehrt.

Bevorzugt verwendet eine Serviceöffnungsvorrichtung keine Scharniere. Die Serviceklappe kann bevorzugt nicht nur aufgeklappt werden, insbesondere mittels einer Schwenkbewegung zwischen Formschlusszungen und Aufnahmeöffnungen, sondern auch vom Karosseriebauteil abgenommen werden. Die Aufnahmeöffnungen sind bevorzugt Öffnungen an einem horizontal ausgerichteten Teil des Karosseriebauteils.

Besonders bevorzugt ist am Karosseriebauteil im Bereich des zweiten Randes der Serviceöffnung zumindest eine von der Aufnahmeöffnung verschiedene Halteöffnung zur Aufnahme der Formschlusszunge ausgebildet, so dass die Serviceklappe im Bereich ihres zweiten Randes während dem Freilegen der Serviceöffnung durch einen Formschluss am Karosseriebauteil gehalten sein kann. Das Karosseriebauteil weist dann einerseits die Aufnahmeöffnung bzw. Aufnahmeöffnungen auf, über welche eine Abstützung der Serviceklappe bei Abdeckung der Serviceöffnung erfolgen kann, als auch die Halteöffnung oder Halteöffnungen - vorzugsweise wieder zumindest drei - über welche eine Abstützung der Serviceklappe erfolgen kann wenn die Serviceklappe die Serviceöffnung nicht abdeckt und wenn die Magnete am ersten Rand die Serviceklappe nicht halten. Die Halteöffnungen sind bevorzugt Öffnungen an einem vertikal ausgerichteten Teil des Karosseriebauteils.

Vorzugsweise umfasst die Serviceöffnungsvorrichtung zumindest einen Öffnungshaken, wobei der Öffnungshaken, während dem Abdecken der Serviceöffnung durch die Serviceklappe, in eine Hakenöffnung, insbesondere eine Nut zwischen Serviceklappe und Karosseriebauteil, gesteckt werden kann, um die Serviceklappe nach außen zu ziehen und hierdurch die Serviceöffnung freizulegen.

Bevorzugt ist an der Serviceklappe ein Fangband befestigt, wobei das andere Ende des Fangbands am Karosseriebauteil befestigt ist oder am übrigen Kraftfahrzeug befestigbar ist, als Verliersicherung für die Serviceklappe während dem Freilegen der Serviceöffnung, wenn also die Serviceklappe die Serviceöffnung nicht abdeckt.

Bevorzugt umfasst die Serviceöffnungsvorrichtung eine Verriegelung, wobei die Verriegelung an eine Zentralverriegelung des Kraftfahrzeugs anschließbar ist. Die Serviceklappe kann daher über die Zentralverriegelung des Kraftfahrzeugs verriegelt und entriegelt werden.

Das Karosseriebauteil, das die Serviceöffnung aufweist, ist bevorzugt ein Stoßfänger eines Kraftfahrzeugs.

### Kurzbeschreibung der Zeichnungen

Die Erfindung wird im Folgenden beispielhaft unter Bezugnahme auf die Zeichnungen beschrieben.
- Fig. 1: ist eine dreidimensionale Ansicht der Einzelteile einer erfindungsgemäßen Serviceöffnungsvorrichtung.
- Fig. 2: ist eine dreidimensionale Ansicht der Serviceöffnungsvorrichtung gemäß Fig. 1 im zusammengebauten Zustand, bei geschlossener Serviceklappe.
- Fig. 3: ist eine detailliertere Ansicht der Serviceöffnungsvorrichtung gemäß Fig. 1 und 2, bei geöffneter Serviceklappe.
- Fig. 4: ist eine detailliertere Ansicht der Serviceöffnungsvorrichtung gemäß Fig. 3, mit Öffnungshaken.
- Fig. 5: ist eine dreidimensionale Ansicht der Serviceöffnungsvorrichtung gemäß Fig. 2, bei geöffneter Serviceklappe.
- Fig. 6: ist eine dreidimensionale Ansicht der Serviceöffnungsvorrichtung gemäß Fig. 5, bei geschlossener Serviceklappe, und zeigt einen ersten Schritt beim Öffnen der Serviceklappe.
- Fig. 7: ist eine detailliertere Ansicht der Serviceöffnungsvorrichtung gemäß Fig. 6 und zeigt einen zweiten Schritt beim Öffnen der Serviceklappe.

### Detaillierte Beschreibung der Erfindung

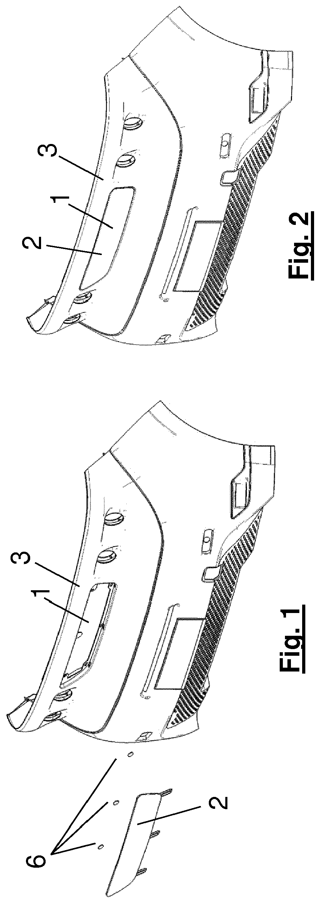

In den Fig. 1-7 ist eine erfindungsgemäße Serviceöffnungsvorrichtung dargestellt.

Fig. 1 zeigt die Einzelteile einer erfindungsgemäßen Serviceöffnungsvorrichtung zum Abdecken und Freilegen einer Serviceöffnung 1 eines Kraftfahrzeuges. Die Serviceöffnungsvorrichtung umfasst ein Karosseriebauteil 3 des Kraftfahrzeugs, nämlich einen Stoßfänger. Das Karosseriebauteil 3, nämlich der Stoßfänger, weist eine Serviceöffnung 1 auf. Die Serviceöffnung 1 hat im Wesentlichen eine rechteckige Form. Die Serviceöffnungsvorrichtung umfasst ferner eine Serviceklappe 2, die ebenfalls im Wesentlichen eine rechteckige Form aufweist und zum Abdecken der Serviceöffnung 1 geeignet ist. Zum Halten der Serviceklappe 2 am Karosseriebauteil 3 werden Magnete 6 verwendet. Fig. 2 zeigt den geschlossenen Zustand der Serviceöffnung 1, also einen Zustand der Serviceklappe 2 während der Abdeckung der Serviceöffnung 1. Die Serviceklappe 2 fügt sich optisch ansprechend in das Karosseriebauteil 3.

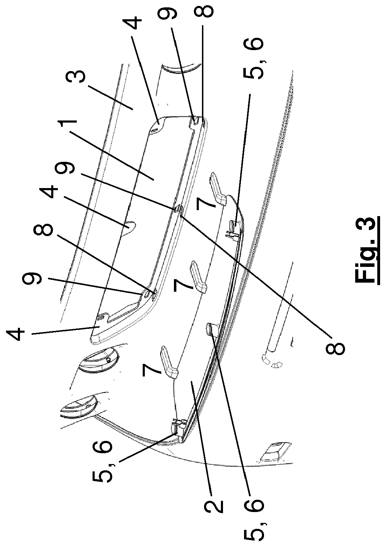

Fig. 3 ist eine detailliertere Ansicht der selben Serviceöffnungsvorrichtung gemäß Fig. 1 und 2, bei geöffneter Serviceklappe 2.

Am Karosseriebauteil 3 sind im Bereich des oberen Randes der Serviceöffnung 1, verteilt über die Breite der Serviceöffnung 1, drei Befestigungslaschen 4 ausgebildet. An der Serviceklappe 2 sind im Bereich des oberen Randes der Serviceklappe 2 ebenfalls drei Befestigungsdome 5 ausgebildet, so dass jeweils ein Befestigungsdom 5 einer Befestigungslasche 4 zugeordnet ist und sich die Befestigungsdome 5 und die Befestigungslaschen 4 jeweils gegenüberstehen. An den Befestigungsdomen 5 ist jeweils ein Magnet 6 angeordnet und befestigt und die Befestigungslaschen 4 sind aus Metall ausgebildet, so dass die Serviceklappe 2 im Bereich ihres oberen Randes durch die Magnetkraft der Magnete 6 während dem Abdecken der Serviceöffnung 1 am Karosseriebauteil 3 gehalten ist.

Alternativ könnten die Magnete 6 auch an den Befestigungslaschen 4 befestigt sein und die Befestigungsdome 5 aus Metall ausgebildet sein, oder es könnten gegenpolige Magnete 6 sowohl an Befestigungslaschen 4 als auch an Befestigungsdomen 5 befestigt sein um eine Anziehungskraft zwischen Serviceklappe 2 und Karosseriebauteil 3 zu gewährleisten.

An der Serviceklappe 2 sind im Bereich des unteren Randes der Serviceklappe 2, wieder verteilt über die Breite der Serviceklappe 2, drei Formschlusszungen 7 ausgebildet. Am Karosseriebauteil 3 sind im Bereich des unteren Randes der Serviceöffnung 1 ebenfalls drei Aufnahmeöffnungen 8 zur Aufnahme der Formschlusszungen 7 ausgebildet, also jeweils den Formschlusszungen 7 gegenüberliegend positioniert, so dass die Serviceklappe 2 im Bereich ihres unteren Randes während dem Abdecken der Serviceöffnung 1, also im geschlossenen Zustand der Serviceöffnung 1, zusätzlich zur magnetischen Haltekraft durch einen Formschluss am Karosseriebauteil 3 gehalten bzw. abgestützt ist.

Die Serviceklappe 2 wird in den Stoßfänger 3 verbaut, indem zuerst die Formschlusszungen 7 in die Aufnahmeöffnungen 8 im Stoßfänger 3 eingeführt werden. Die Serviceklappe 2 wird danach nach oben gedreht bzw. geschwenkt. Durch das Aufdrehen bzw. Aufschwenken der Serviceklappe 2 werden die Magnete 6, die einander anziehen, zueinander geführt. Dadurch wird die Serviceklappe 2 positioniert befestigt.

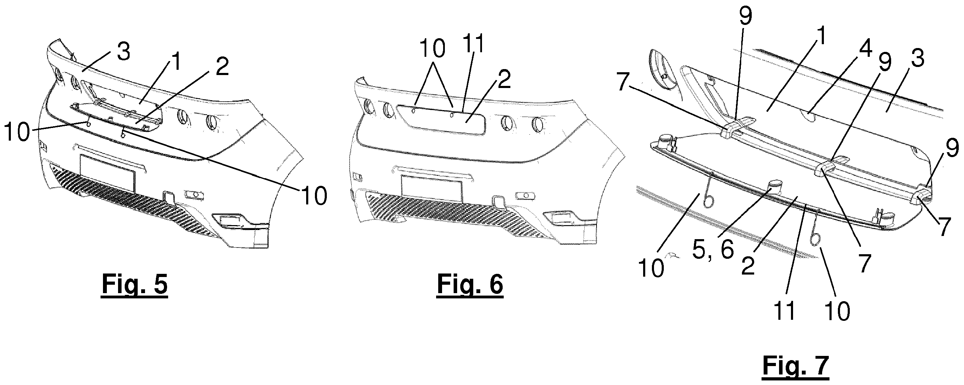

Am Karosseriebauteil 3 sind, im Bereich des unteren Randes der Serviceöffnung 1, auch drei von der Aufnahmeöffnung 8 verschiedene Halteöffnungen 9 zur Aufnahme der Formschlusszungen 7 ausgebildet. Während die Aufnahmeöffnungen 8 horizontal ausgereichtet sind, so dass die Formschlusszungen 7 vertikal in die Aufnahmeöffnungen 8 gesteckt werden können, sind die Halteöffnungen vertikal ausgereichtet, so dass die Formschlusszungen 7 horizontal in die Aufnahmeöffnungen 8 gesteckt werden können. Die Serviceklappe 2 kann hierdurch im Bereich ihres unteren Randes, während dem Freilegen der Serviceöffnung 1 also im nicht-abdeckenden Zustand, bei geöffneter bzw. abgenommener Serviceklappe 2, durch einen Formschluss am Karosseriebauteil 3 gehalten sein. Die Formschlusszungen 7 können daher sowohl für einen Halt der geschlossenen Serviceklappe 2 verwendet werden, als auch zum Halten der geöffneten Serviceklappe 2. Dieses Halten der geöffneten Serviceklappe 2 ist in den Figuren 5 und 7 gut ersichtlich.

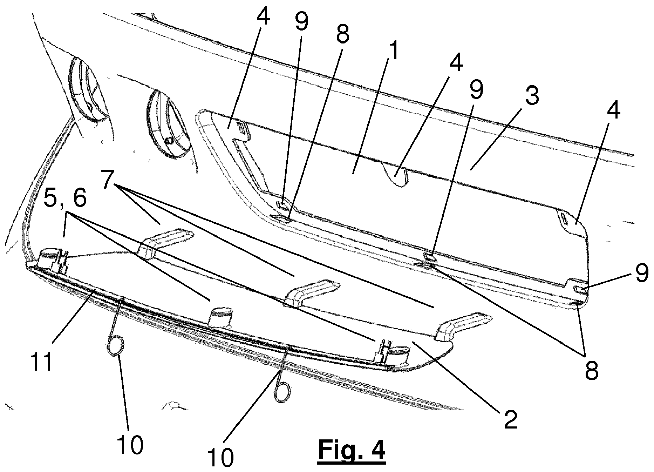

Fig. 4 zeigt, dass die Serviceöffnungsvorrichtung zumindest einen, hier zwei Öffnungshaken 10 umfassen kann, zum Öffnen der Serviceklappe 2. Die Öffnungshaken 10 können bei geschlossener Serviceklappe 2, also während dem Abdecken der Serviceöffnung 1 durch die Serviceklappe 2, in Hakenöffnungen, insbesondere eine horizontal durchgehende Nut 11 im Bereich des oberen Randes der Serviceklappe 2, in der Serviceklappe 2 oder zwischen Serviceklappe 2 und Karosseriebauteil 3, gesteckt werden, so dass die Haken der Öffnungshaken 10 die Nut bzw. Hakenöffnungen hintergreifen, um die Serviceklappe 2 mittels Öffnungshaken 10 nach außen zu ziehen und hierdurch die Serviceöffnung 1 zu öffnen bzw. freizulegen. Durch die Notwendigkeit der Verwendung von Öffnungshaken 10 zum Abdecken der Serviceöffnung 1, kann der Zugang zur Serviceöffnung 1 auf bestimmte Personen, wie Servicepersonal, beschränkt werden.

Den Vorgang des Öffnens der Serviceklappe 2 zeigen die Fig. 6 und Fig. 7.

Fig. 6 zeigt die noch geschlossene Serviceklappe 2, wobei bereits zwei Öffnungshaken 10 in die Nut 11 der Serviceklappe 2 eingesetzt sind. Durch Ziehen an den Öffnungshaken 10 wird die Serviceklappe 2 am oberen Rand vom Karosseriebauteil 3 entfernt und kann durch Hochziehen an ihrem unteren Rand von den Aufnahmeöffnungen 8 abgezogen werden. Die freie Serviceklappe 2 kann danach mittels Formschlusszungen 7 in die Halteöffnungen 9 gesteckt werden, so dass diese beispielsweise während Servicearbeiten nicht verloren geht.

An der Serviceklappe 2 kann auch ein Fangband befestigt sein, dessen anderes Ende am Karosseriebauteil 3 befestigt ist oder am übrigen Kraftfahrzeug, als Verliersicherung für die Serviceklappe 2 bei abgenommener Serviceklappe 2, also während dem Freiliegen der Serviceöffnung 1.

Die Serviceöffnungsvorrichtung kann eine Verriegelung umfassen, sodass die Serviceklappe 2 im verriegelten Zustand nicht vom Karosseriebauteil 3 abgenommen werden kann. Die Verriegelung kann über eine Zentralverriegelung des Kraftfahrzeugs bedienbar sein.

### Bezugszeichenliste

- 1: Serviceöffnung
- 2: Serviceklappe
- 3: Karosseriebauteil
- 4: Befestigungslasche
- 5: Befestigungsdom
- 6: Magnet
- 7: Formschlusszunge
- 8: Aufnahmeöffnung
- 9: Halteöffnung
- 10: Öffnungshaken
- 11: Nut

## Patentansprüche

1. Serviceöffnungsvorrichtung zum Abdecken und Freilegen einer Serviceöffnung (1) eines Kraftfahrzeuges, wobei die Serviceöffnungsvorrichtung eine Serviceklappe (2) umfasst und ein Karosseriebauteil (3) des Kraftfahrzeugs umfasst, wobei das Karosseriebauteil (3) die Serviceöffnung (1) aufweist, wobei am Karosseriebauteil (3) im Bereich eines ersten Randes der Serviceöffnung (1) zumindest eine Befestigungslasche (4) ausgebildet ist, wobei an der Serviceklappe (2) im Bereich des dem ersten Rand der Serviceöffnung (1) entsprechenden ersten Randes der Serviceklappe (2) zumindest ein Befestigungsdom (5) ausgebildet ist, wobei an der Befestigungslasche (4) und/oder am Befestigungsdom (5) ein Magnet (6) angeordnet ist, so dass die Serviceklappe (2) im Bereich des ersten Randes während dem Abdecken der Serviceöffnung (1) durch Magnetkraft am Karosseriebauteil (3) gehalten ist.

2. Serviceöffnungsvorrichtung nach Anspruch 1,
**dadurch gekennzeichnet, dass** der erste Rand der obere Rand ist oder dass der erste Rand der untere Rand ist oder dass der erste Rand ein seitlicher Rand ist.

3. Serviceöffnungsvorrichtung nach Anspruch 1 oder 2,
**dadurch gekennzeichnet, dass** am Karosseriebauteil (3) im Bereich des ersten Randes der Serviceöffnung (1) zumindest drei Befestigungslaschen (4), verteilt über die Breite der Serviceöffnung (1), ausgebildet sind, wobei an der Serviceklappe (2) im Bereich des ersten Randes der Serviceklappe (2) zumindest drei Befestigungsdome (5), verteilt über die Breite der Serviceklappe (2), ausgebildet sind, wobei an den Befestigungslaschen (4) und/oder an den Befestigungsdomen (5) jeweils ein Magnet (6) angeordnet ist, so dass die Serviceklappe (2) im Bereich des ersten Randes während dem Abdecken der Serviceöffnung (1) durch Magnetkraft im Wesentlich über die gesamte Breite der Serviceklappe (2) am Karosseriebauteil (3) gehalten ist.

4. Serviceöffnungsvorrichtung nach zumindest einem der vorhergehenden Ansprüche,
**dadurch gekennzeichnet, dass** an der Serviceklappe (2) im Bereich eines, dem ersten Rand gegenüberliegenden, zweiten Randes der Serviceklappe (2) zumindest eine Formschlusszunge (7) ausgebildet ist, bevorzugt zumindest drei Formschlusszungen (7), wobei am Karosseriebauteil (3) im Bereich des dem zweiten Rand der Serviceklappe (2) entsprechenden zweiten Randes der Serviceöffnung (1) zumindest eine Aufnahmeöffnung (8) zur Aufnahme der Formschlusszunge (7) ausgebildet ist, bevorzugt zumindest drei Aufnahmeöffnungen (8) zur Aufnahme der jeweiligen Formschlusszungen (7), so dass die Serviceklappe (2) im Bereich ihres zweiten Randes während dem Abdecken der Serviceöffnung (1) durch einen Formschluss am Karosseriebauteil (3) gehalten ist.

5. Serviceöffnungsvorrichtung nach Anspruch 4,
**dadurch gekennzeichnet, dass** am Karosseriebauteil (3) im Bereich des zweiten Randes der Serviceöffnung (1) zumindest eine von der Aufnahmeöffnung (8) verschiedene Halteöffnung (9) zur Aufnahme der Formschlusszunge (7) ausgebildet ist, so dass die Serviceklappe (2) im Bereich ihres zweiten Randes während dem Freilegen der Serviceöffnung (1) durch einen Formschluss am Karosseriebauteil (3) gehalten sein kann.

6. Serviceöffnungsvorrichtung nach zumindest einem der vorhergehenden Ansprüche,
**dadurchgekennzeichnet**, dass die Serviceöffnungsvorrichtung zumindest einen Öffnungshaken (10) umfasst, wobei der Öffnungshaken (10), während dem Abdecken der Serviceöffnung (1) durch die Serviceklappe (2), in eine Hakenöffnung, insbesondere eine Nut (11) in der Serviceklappe (2) oder zwischen Serviceklappe (2) und Karosseriebauteil (3), gesteckt werden kann, um die Serviceklappe (2) nach außen zu ziehen und hierdurch die Serviceöffnung (1) freizulegen.

7. Serviceöffnungsvorrichtung nach zumindest einem der vorhergehenden Ansprüche,
**dadurch gekennzeichnet, dass** an der Serviceklappe (2) ein Fangband befestigt ist, wobei das Fangband am Karosseriebauteil (3) befestigt ist oder am übrigen Kraftfahrzeug befestigbar ist, als Verliersicherung für die Serviceklappe (2) während dem Freiliegen der Serviceöffnung (1).

8. Serviceöffnungsvorrichtung nach zumindest einem der vorhergehenden Ansprüche,
**dadurch gekennzeichnet, dass** die Serviceöffnungsvorrichtung eine Verriegelung umfasst, wobei die Verriegelung an eine Zentralverriegelung des Kraftfahrzeugs anschließbar ist.

9. Serviceöffnungsvorrichtung nach zumindest einem der vorhergehenden Ansprüche,
**dadurch gekennzeichnet, dass** das Karosseriebauteil (3) ein Stoßfänger ist.
